# EUROPÄISCHE PATENTANMELDUNG

(11) **EP 1 578 057 A1**
(43) Veröffentlichungstag der Anmeldung: **21.09.2005**
(21) Anmeldenummer: 04405155.5
(22) Anmeldetag: 15.03.2004
(51) Int. Cl.: H04L 12/18

(54) **Interaktives Kommunikationssystem für Veranstaltungen**

(71) Anmelder: RoNexus Services AG, 4002 Basel (CH)
(72) Erfinder: Stoll, Oliver Alexander, 79771 Klettgau-Erzingen (DE)
(74) Vertreter: Heinen, Detlef

(57) **Zusammenfassung**

Ein interaktives Kommunikationssystem für Veranstaltungen umfasst eine Steuerungseinheit und mehrere Ein- und Ausgabeeinheiten. Die Steuerungseinheit umfasst eine Steuerungssoftware (1) mit mehreren Modulen, die individuell freischaltbar ausgebildet sind. Die Module der Steuerungssoftware umfassen mindestens ein Steuermodul (10), ein Frage- und Antwortmodul (11), ein Abstimmungsmodul (12), ein Übersetzungsmodul (13) sowie ein Infrastruktur-Kontrollmodul (14).

## Beschreibung

Die Erfindung betrifft ein interaktives Kommunikationssystem für Veranstaltungen gemäss dem unabhängigen Patentanspruch.

Veranstaltungen wie Konferenzen, Vorträge, Versammlungen, etc., finden in der Regel in Räumlichkeiten statt, die speziell für derartige Veranstaltungen konzipiert sind und normalerweise unter anderem über eine umfangreiche Bestuhlung für die Teilnehmer verfügen. Diese Räumlichkeiten sind mit einer bestimmten Infrastruktur versehen, die - aufgrund der Tatsache, dass viele solcher Räumlichkeiten bereits schon einige Jahre alt sind - im Hinblick auf die technischen Möglichkeiten, die das Multimedia-Zeitalter bietet, überaltert sind. Ein Beispiel hierfür sind Konferenzsäle, wo an den einzelnen Plätzen der Bestuhlung häufig bestenfalls diskrete technische Mittel vorgesehen sind, wie z.B. eine Buchse zum Einstecken eines Kopfhörers und/oder ein Mikrofon sowie Schalter zur Wahl des Kanals bei einem Kopfhörer (z.B. wenn die Sprache eines Redners simultan in andere Sprachen überesetzt wird) bzw. zum Ein- und Ausschalten eines Mikrofons, wenn ein Beitrag gegeben werden soll. Von diesen diskreten technischen Mitteln aus sind diskrete Kabel verlegt, die zu einer zentralen Steuerung führen.

Wie man leicht erkennt, ist eine derartige Infrastruktur nach heutigen Massstäben sehr unflexibel, da sie ausser dem Einstecken eines Kopfhörers und der Kanalwahl bzw. dem Ein- und Ausschalten eines Mikrofons keine weiteren Funktionen erlauben.

Da die Entscheidung, ob und ggf. wie in die Infrastruktur solcher Räumlichkeiten investiert werden soll, in der Regel eine Entscheidung mit erheblichen finanziellen Konsequenzen ist, andererseits die Technik im Multimedia-Zeitalter sehr schnell voranschreitet, sollen die Räumlichkeiten möglichst für viele Typen von Veranstaltungen (Präsentationen, Wahlen, etc.) geeignet und für künftige technische Entwicklungen offen sein. Ein derartiges Kommunikationssystem vorzuschlagen, ist Aufgabe der vorliegenden Erfindung.

Diese Aufgabe wird durch das erfindungsgemässe Kommunikationssystem, wie es durch die Merkmale des unabhängigen Patentanspruchs charakterisiert ist, gelöst. Vorteilhafte Weiterbildungen des erfindungsgemässen Kommunikationssystems ergeben sich aus den Merkmalen der abhängigen Patentansprüche.

Insbesondere umfasst das erfindungsgemässe interaktive Kommunikationssystem eine Steuerungseinheit (z.B. einen Rechner) und mehrere Ein- und Ausgabeeinheiten (z.B. berührungsempfindliche Anzeigen). Die Steuerungseinheit umfasst ihrerseits eine Steuerungssoftware mit mehreren Modulen, die individuell freischaltbar ausgebildet sind. Die Module der Steuerungssoftware umfassen dabei mindestens ein Steuermodul, ein Frage- und Antwortmodul, ein Abstimmungsmodul, ein Übersetzungsmodul sowie ein Infrastruktur-Kontrollmodul.

Die Steuerungssoftware umfasst stets mindestens alle vorgenannten Module, jedoch sind die einzelnen Module (ausser natürlich dem Steuermodul) individuell freischaltbar, sodass der Käufer entscheiden kann, welche Module für die Infrastruktur seiner Räumlichkeit benötigt werden und welche nicht. Diese Flexibilität erlaubt es dem Käufer, die für seine Räumlichkeit und für seine Verwendungszwecke derzeit massgeschneiderte Lösung zu kaufen, wobei er für den Fall, dass er nicht alle Module benötigt, mit einem Preisvorteil bedacht werden kann. Stellt sich dann im Laufe der Zeit heraus, dass weitere Funktionalitäten wünschenswert sind, kann das System jederzeit ohne grossen Aufwand "nachgerüstet" werden, indem weitere Module freigeschaltet werden oder weitere Module/Funktionalitäten ergänzt werden. Sind alle vorgenannten Module freigeschaltet, so steht ein sehr flexibles, multifunktionales Kommunikationssystem zur Verfügung.

Über die Steuereinheit (z.B. den Rechner) können die einzelnen Ein- und Ausgabeeinheiten jeweils mit einer bestimmten Funktionalität belegt werden, die auf den Typ der jeweiligen Veranstaltung massgeschneidert ist. Dies lässt sich besonderes gut mit Hilfe von berührungsempfindlichen Anzeigen ("touch-screens") realisieren. Mit Hilfe der Steuerungssoftware lässt sich dabei die Anzeige (Oberfläche) stets optimal für den jeweiligen Zweck zuschneiden. Wenn die einzelnen Plätze fest an bestimmte Personen vergeben sind (z.B. bei Veranstaltungen, bei denen die Teilnehmer persönlich akkreditiert sind), kann ohne weiteres jede einzelne Anzeige individuell auf die entsprechende Person zugeschnitten sein, zum Beispiel kann die Anzeige durch ein entsprechendes Bild auf der Anzeige der Person zu erkennen geben, dass sie an dem ihr zugewiesenen Platz angekommen ist.

Auch lässt sich grundsätzlich für jede einzelne Person individuell festlegen, welche Mittel/Medien dieser Person zur Verfügung gestellt werden sollen. Ferner lassen sich so auf einfache Weise Gruppen von Teilnehmern zusammenfassen, denen die gleichen technischen Mittel/Medien bereit gestellt werden sollen. So ist es beispielsweise möglich, unterschiedlichen Gruppen von Personen verschiedene Mittel/Medien zur Verfügung zu stellen, wobei innerhalb einer Gruppe allen Personen die gleichen Mittel/Medien zur Verfügung gestellt werden. Auch ist es möglich, bestimmten Gruppen von Plätzen (Bestuhlungen) bestimmte Mittel/Medien zur Verfügung zu stellen. Ebenso ist es auch möglich, allen Teilnehmern bzw. allen Plätzen die gleichen Mittel/Medien zur Verfügung zu stellen. Dies alles kann mit Hilfe der Steuerungssoftware ohne weiteres und insbesondere ohne spezielle Vorkehrungen an den einzelnen Plätzen der Bestuhlung der Räumlichkeit erfolgen.

Die Steuerung der Veranstaltung kann durch den Moderator (aber auch durch eine andere damit beauftragte Person) erfolgen, der (die) sich durchaus auch unter den Teilnehmern - also an einem bestimmten Platz der Bestuhlung - befinden kann. Der Moderator (oder die Person die mit der Ablaufsteuerung beauftragt ist) hat dazu Funktionen zur Verfügung, welche die Steuerung der Kommunikation während der Veranstaltung betreffen. Beispielsweise kann er über seine Ein- und Ausgabeeinheit das Wort an den jeweils nächsten Teilnehmer weitergeben, selber das Wort ergreifen, etc.. Bei Veranstaltungen, bei denen die einzelnen Teilnehmer akkreditiert sind und ihnen Plätze zugewiesen sind, kann der Moderator die verschiedenen Personen auch namentlich ansprechen, da ihm beispielsweise auf seiner Anzeige signalisiert werden kann, welcher Person er das Wort erteilen möchte bzw. erteilt hat, bzw. welcher Person er eine Frage beantwortet, etc..

Die vorgenannten Möglichkeiten stellen nur eine kleine Auswahl der Möglichkeiten dar, die das erfindungsgemässe interaktive Kommunikationssystem bietet. Weitere Möglichkeiten werden weiter unten noch erläutert werden, sie sind jedoch ebenfalls nur beispielhaft zu betrachten und sollen illustrieren, welch hohes Mass an Flexibilität und Erweiterbarkeit das erfindungsgemässe System aufweist.

Bei einem speziellen Ausführungsbeispiel des erfindungsgemässen Kommunikationssystem umfasst das Kommunikationssystem weiterhin ein oder mehrere Endgeräte wie z.B. Kameras, Mikrofone, Kopfhörer, Projektoren, etc., welche durch das Infrastruktur-Kontrollmodul der in der Steuerungseinheit vorgesehenen Steuerungssoftware individuell, gruppenweise (also mehrere davon, aber nicht alle) oder global (alle) angesteuert werden können. Auf diese Weise können Medien wie z.B. Mikrofone von mehreren Personen genutzt werden, wobei ein bestimmtes Medium immer nur von einer Person gleichzeitig angesteuert werden kann und erst wieder freigegeben werden muss, bevor es von einer anderen Person benutzt werden kann.

Beispielsweise kann es auf diese Weise durch das Vorsehen einer Anzahl von Richtmikrofonen an der Decke eines Konferenzsaales überflüssig sein, dass eine oder mehrere Personen bei einer Veranstaltung, bei der eine Frage/Antwort-Runde stattfindet, mit einem Mikrofon durch die Räumlichkeit zu derjenigen Person eilen muss, die eine Frage hat oder einen Beitrag leisten möchte. Hier lässt sich die Richtcharakteristik der an der Decke fest installierten Richtmikrofone jeweils zu derjenigen Person hin steuern, die eine Frage stellen möchte oder eine Antwort geben möchte.

Ein weiteres vorteilhaftes Ausführungsbeispiel des erfindungsgemässen Kommunikationssystems umfasst mehrere Verteilereinheiten, welche jeweils mit einer Gruppe von berührungsempfindlichen Anzeigen verbunden sind. Die einzelnen Verteilereinheiten weisen mehrere serielle Schnittstellen auf, an welche die berührungsempfindlichen Anzeigen angeschlossen sind, ferner einen Konverter zum Umsetzen von seriellen Signalen in ETHERNET- (oder TCP/IP oder ähnliche) Signale und umgekehrt, sowie einen ETHERNET-Anschluss, welcher mit der Steuerungseinheit (dem Steuerrechner) verbunden ist.

Dieses Ausführungsbeispiel ist insofern vorteilhaft, als es im Hinblick auf mögliche künftige Anwendungen unter Einsatz konventioneller Mittel die Skalierbarkeit erhält und dabei den technischen Aufwand und somit auch die Kosten in Grenzen hält. Zwar sind bereits berührungsempfindliche Anzeigen mit fest implementierten TCP/IP-Systemen verfügbar, sie sind jedoch technisch aufwändiger und auch entsprechend teurer. Wesentlich preisgünstiger sind hingegen berührungsempfindliche Anzeigen mit fest implementierter serieller Schnittstelle (RS 232).

Mit den vorgeschlagenen Verteilereinheiten, an die jeweils eine gewisse Anzahl von Anzeigen - z.B. sechzehn Anzeigen - über serielle Schnittstellen (RS 232) angeschlossen sind, ist es möglich, das erfindungsgemässe Kommunikationssystem einerseits für künftige Entwicklungen flexibel zu halten, aber gleichzeitig von den kostengünstigen berührungsempfindlichen Anzeigen Gebrauch zu machen, um die derzeit noch hohen Kosten für skalierbare Anzeigen (siehe oben) zu vermeiden, dabei aber den Aufwand bei der Verkabelung gering zu halten. Werden nämlich die Verteilereinheiten vorgesehen, muss nicht jede einzelne Anzeige über ein eigenes langes serielles Kabel mit der Steuerungseinheit (Rechner) verbunden sein, sondern es muss lediglich jede Verteilereinheit über ein ETHERNET-Kabel an die Steuerungseinheit (Rechner) angeschlossen sein, während die letzten Meter von der Verteilereinheit zu den einzelnen Anzeigen an den Plätzen einer Bestuhlung jeweils über ein serielles Kabel überbrückt werden, das die serielle Schnittstelle (RS 232) der berührungsempfindlichen Anzeige mit einer der seriellen Schnittstellen (RS 232) der Verteilereinheit verbindet.

Während der Datenverkehr von den einzelnen Anzeigen zu den Verteilereinheiten hin relativ gering ist (einzelne Zeichen aufgrund von Berührungen), ist der Datenverkehr in umgekehrter Richtung - also von der Steuerungseinheit (Rechner) zu den Anzeigen hin - um einiges grösser, zumal jede einzelne berührungsempfindliche Anzeige individuell gestaltet sein kann. Umgekehrt ist dies bei den bekannten "Terminalserver"-Systemen bzw. "Modemserver"-Systemen, also bei grösseren Serversystemen mit Fernwartung von Servern ohne Anzeige und Tastatur mittels Telnet-Protokoll: Dort ist die Anzeige (der Bildschirm) des Benutzers typischerweise am Ende der ETHERNET-Leitung angeordnet und die einzelnen Server sind über serielle Schnittstellen angeschlossen. Der Benutzer gibt aufgrund der Daten, die er von einer der seriellen Schnittstellen von einem der Server erhält, einzelne Steuerkommandos an den jeweiligen Server zurück. Der Hauptdatenverkehr verläuft hier von den angeschlossenen Servern zur Anzeige hin.

Solche Terminalserver können bei dem erfindungsgemässen Kommunikationssystem nun quasi "in umgekehrter Richtung" (Hauptdatenstrom vom Steuerrechner zu den einzelnen Anzeigen) eingesetzt werden. Dabei hat sich herausgestellt, dass die Terminalserver den Datenstrom bidirektional uneingeschränkt durchlassen und sogar gleichzeitig quasi eine eigene Verbindung zu jeder einzelnen Anzeige offen hält, sodass über die Verteilereinheiten mehrere angeschlossene Anzeigen gleichzeitig angesteuert werden können (wie bei einem Multiplexer und nicht einzeln nacheinander wie bei einer seriellen Weiche).

Weitere vorteilhafte Aspekte des erfindungsgemässen interaktiven Kommunikationssystems ergeben sich aus der nachfolgenden Beschreibung eines Ausführungsbeispiels mit Hilfe der Zeichnung. Es zeigen:
- Fig. 1: ein Ausführungsbeispiel der Struktur der Steuerungssoftware des erfindungsgemässen Kommunikationssystems mit verschiedenen Modulen,
- Fig. 2: ein Ausführungsbeispiel der Anzeige der Steuerungseinheit des erfindungsgemässen Kommunikationssystems,
- Fig. 3: ein Ausführungsbeispiel der Anzeige einer Einund Ausgabeeinheit des erfindungsgemässen Kommunikationssystems in einer Frage-/AntwortRunde (Ausgangszustand),
- Fig. 4: das Ausführungsbeispiel der Anzeige aus Fig. 3 nach der Eingabe einer Wortmeldung,
- Fig. 5: das Ausführungsbeispiel der Anzeige aus Fig. 3 bzw. Fig. 4 während das Wort erteilt ist,
- Fig. 6: ein Ausführungsbeispiel der Anzeige des erfindungsgemässen Kommunikationssystems bei einer Abstimmung (Ausgangszustand), wie sie auf eine Wand bzw. Leinwand projiziert werden kann,
- Fig. 7: eine Anzeige auf den einzelnen Ein- und Ausgabeeinheiten zu dem Zeitpunkt, in dem abgestimmt werden soll,
- Fig. 8: das Ausführungsbeispiel der Anzeige aus Fig. 7 nach Abgabe der Stimme bzw. während der Auswertung,
- Fig. 9: das Ausführungsbeispiel der Anzeige aus Fig. 6 bis Fig. 8 mit dem Ergebnis der Auswertung (Darstellung der Ergebnisse der einzelnen Kandidaten),
- Fig. 10: das Ausführungsbeispiel der Anzeige aus Fig. 6 bis Fig. 8 mit dem Ergebnis der Auswertung bei einer anderen Art von Abstimmung (Ja/NeinAbstimmung),

- Fig. 11: ein Ausführungsbeispiel der Anzeige einer Einund Ausgabeeinheit des erfindungsgemässen Kommunikationssystems zur Wahl einer Sprache,
- Fig. 12: die Anzeige aus Fig. 11 nach der Auswahl der gewünschten Sprache,
- Fig. 13: die Anzeige einer Ein- und Ausgabeeinheit einer Dolmetscherin, die zuständig ist für die Übersetzung in eine der gewünschten Sprachen
und
- Fig. 14: ein Ausführungsbeispiel der Anzeige zur Steuerung der einzelnen Medien.

Im folgenden wird ein Ausführungsbeispiel des erfindungsgemässen interaktiven Kommunikationssystems erläutert, wie es beispielsweise in einem Konferenzsaal Anwendung finden kann, ohne dabei aber auf die spezifische Anwendung in einem Konferenzsaal beschränkt zu sein. Die Ein- und Ausgabeeinheiten bei den einzelnen Plätzen der Bestuhlung des Konferenzsaals können sich dabei auf einfache berührungsempfindliche Anzeigen ("touch-screens") beschränken, ebenfalls kann dies bei der Steuerungseinheit der Fall sein. Ausserdem können an den einzelnen Plätzen der Bestuhlung zusätzlich Hardware-Komponenten vorgesehen sein, wie z.B. Kopfhörerbuchsen, fest installierte Mikrofone oder Kartenleser. Die auf der Anzeige dargestellten Schaltflächen können durch Berührung mit dem Finger oder z.B. einem geeigneten stumpfen Stift (ähnlich wie bei einem "Personal Digital Assistant") erfolgen.

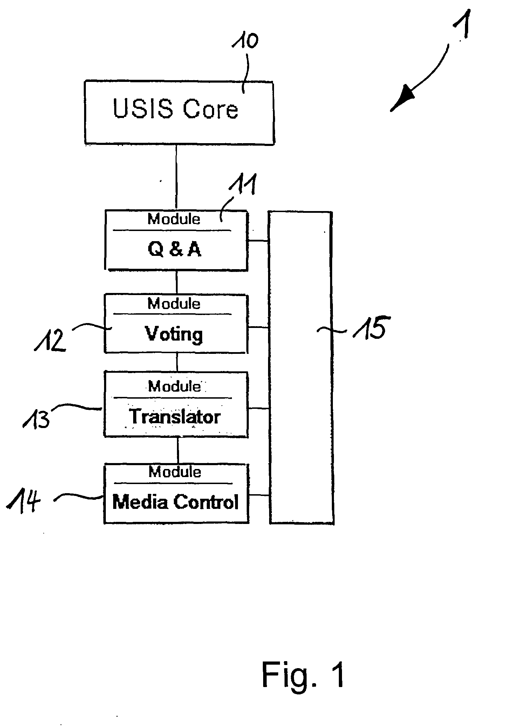

In **Fig. 1** erkennt man die Struktur der Steuerungssoftware eines Ausführungsbeispiels des erfindungsgemässen interaktiven Kommunikationssystems. Die Steuerungssoftware 1 ist auf einem zentralen Rechner installiert und ist modular aufgebaut. Sie umfasst mindestens ein Steuerungsmodul 10, ein Frage- und Antwortmodul 11, ein Abstimmungsmodul 12, ein Übersetzungsmodul 13, sowie ein Infrastruktur-Kontrollmodul 14 zur Steuerung von z.B. Multimedia-Endgeräten wie Projektoren, Mikrofonen, DVD-Playern, Videorecordern, und/oder zur Steuerung der Saalbeleuchtung, der Vorhänge, von Leinwänden, etc.. Wie bereits erwähnt ist diese Aufzählung lediglich beispielhaft zu betrachten und nicht abschliessend.

Die einzelnen Module 10 bis 14 sind grundsätzlich immer in der Steuerungssoftware 1 enthalten, allerdings müssen nicht notwendigerweise alle Module freigeschaltet sein. Lediglich das Steuerungsmodul 10 muss immer freigeschaltet sein. Entsprechend der gewünschten Anwendung können somit verschiedene Module 11 bis 14 der Software freigeschaltet sein, während andere nicht freigeschaltet sind und somit der Anwender von diesen auch nicht Gebrauch machen kann. Diese Möglichkeit des selektiven Freischaltens der Module 11 bis 14 ist in Fig. 1 durch einen Freischaltblock 15 schematisch angedeutet, sodass bei der Preisbildung berücksichtigt werden kann, welche Module freigeschaltet sind und welche nicht, also von welchen Modulen der Anwender Gebrauch machen kann und von welchen nicht. Auch besteht die Möglichkeit, einzelne Module mit zusätzlichen Funktionen zu versehen und sie somit weiter "aufzurüsten", um den Bedürfnissen der einzelnen Anwender so gut wie möglich entsprechen zu können.

Sollte sich im Laufe der Nutzung des Kommunikationssystems durch den Anwender herausstellen, dass weitere Module bzw. weitere Funktionen innerhalb eines Modules wünschenswert wären, muss lediglich ein Freischalten der zusätzlich gewünschten Module erfolgen bzw. eine Funktion innerhalb eines Moduls aufgerüstet werden, was nach der Entrichtung des Kaufpreises für diese Module keinerlei technische Schwierigkeit bedeutet, da die Module ja grundsätzlich als Bestandteile der Software installiert sind, sie sind nur noch nicht freigeschaltet.

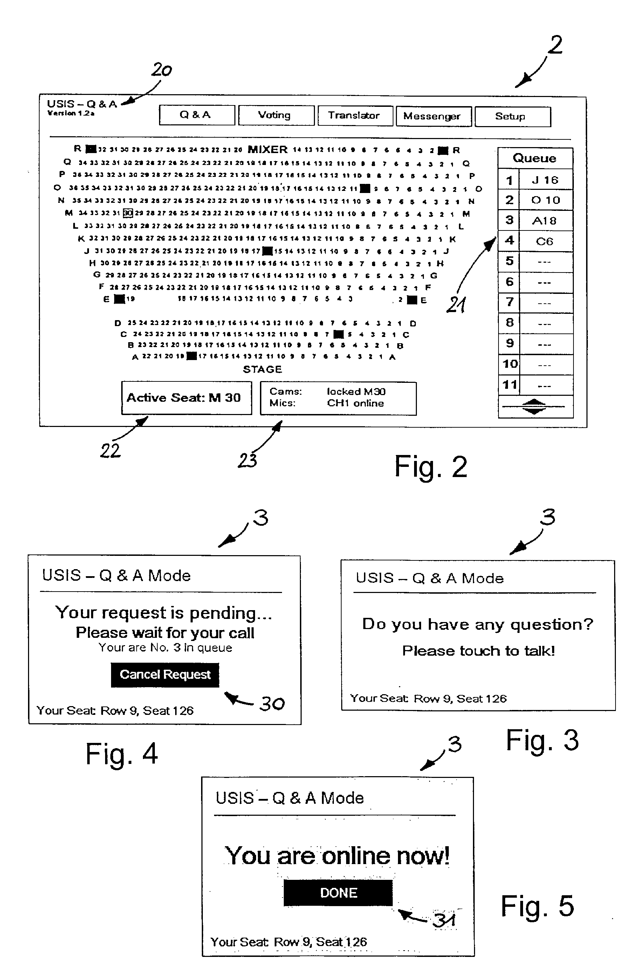

In **Fig. 2** erkennt man ein Ausführungsbeispiel der Anzeige 2 - z.B. eine berührungsempfindliche Anzeige - der Steuereinheit des erfindungsgemässen interaktiven Kommunikationssystems. In der linken oberen Ecke 20 der Anzeige 2 kann man erkennen, dass gerade das Frage- und Antwortmodul 11 (siehe Fig. 1) aktiviert ist und somit eine Frage-/Antwort-Runde bzw. eine Diskussionsrunde im Konferenzsaal stattfindet. Mit Hilfe der Anzeige 2 kann beispielsweise der Moderator den Ablauf der Frage-/Antwort-Runde steuern. Entlang des rechten Randes der Anzeige 2 erkennt man die Reihenfolge 21, in welcher sich die Teilnehmer zu Wort gemeldet haben. Am unteren Rand der Anzeige 2 erkennt man zwei Felder 22 und 23, wobei in dem einen Feld 22 angezeigt wird, welcher Teilnehmer in welcher Reihe auf welchem Platz gerade das Wort hat (hier: der Teilnehmer in der Reihe M mit der Platznummer dreissig), während in dem rechten Feld angezeigt wird, dass beispielsweise eine im Saal vorhandene Kamera auf diesen Teilnehmer gerichtet ist und sein Mikrofon oder ein entsprechendes im Saal herumgereichtes Mikrofon, das jetzt dieser Teilnehmer hat, aktiviert ist. Dadurch kann z.B. gleichzeitig ein Bild von diesem Teilnehmer auf eine Leinwand im Konferenzsaal projiziert werden und sein Beitrag über Lautsprecher wiedergegeben werden, damit die anderen Teilnehmer in grösseren Konferenzsälen den Teilnehmer, der gerade das Wort hat, besser erkennen und verstehen können. Ferner kann die Veranstaltung auch an einen anderen Ort übertragen werden oder sie kann aufgezeichnet werden. Auch kann während der Frage/Antwort-Runde eine CD oder eine DVD zur Dokumentation "gebrannt" werden. Es sei auch hier ausdrücklich erwähnt, dass dies nur eine beispielhafte und nicht abschliessende Aufzählung von Möglichkeiten ist, die das erfindungsgemässe interaktive Kommunikationssystem bietet.

Wenn nun ein Teilnehmer eine Frage hat oder einen Beitrag leisten möchte, so ist auf der Anzeige 3 des Teilnehmers zunächst der Ausgangszustand **(Fig. 3)** erkennbar. Berührt er die Anzeige, so hat er sich zu Wort gemeldet und die Wortmeldung wurde beim Moderator registriert und in die Reihe der Wortmeldungen eingereiht (siehe Fig. 2).

Dem Teilnehmer wird nun auf seiner Anzeige 3 angezeigt **(Fig. 4)**, dass seine Wortmeldung registriert wurde, und es wird seine Position in der Reihe der Wortmeldungen angezeigt. Möchte der Teilnehmer seine Wortmeldung zurücknehmen, z.B. weil seine Frage bereits beantwortet wurde, so kann er die entsprechende berührungsempfindliche Schaltfläche 30 auf seiner Anzeige 3 berühren und seine Wortmeldung wird wieder gelöscht.

Ist der Teilnehmer an der Reihe, seine Frage zu stellen bzw. seinen Beitrag zu leisten, wird ihm dies auf seiner Anzeige 3 angezeigt **(Fig. 5)**. Er kann nun seinen Beitrag leisten. Sobald sein Beitrag beendet ist, kann er die berührungsempfindliche Schaltfläche 31 auf seiner Anzeige 3 berühren, sodass die nächste Wortmeldung abgerufen werden kann oder der Moderator die Frage beantworten kann.

Hier kann nun beispielsweise das Frage- und Antwortmodul 11 (Fig. 1) eine weitere Funktion haben, indem beispielsweise ein Teilnehmer, der zu einem gerade in diesem Augenblick von einem anderen Teilnehmer oder vom Moderator gegebenen Beitrag selbst etwas zum gleichen Thema beitragen möchte. Für diesen Fall kann beispielsweise auf der Anzeige 3 eine weitere berührungsempfindliche Schaltfläche (z.B. "urgent request", nicht dargestellt) vorgesehen sein, wobei eine abgegebene dringende Wortmeldung auch entsprechend auf der Anzeige 2 des Moderators erscheint.

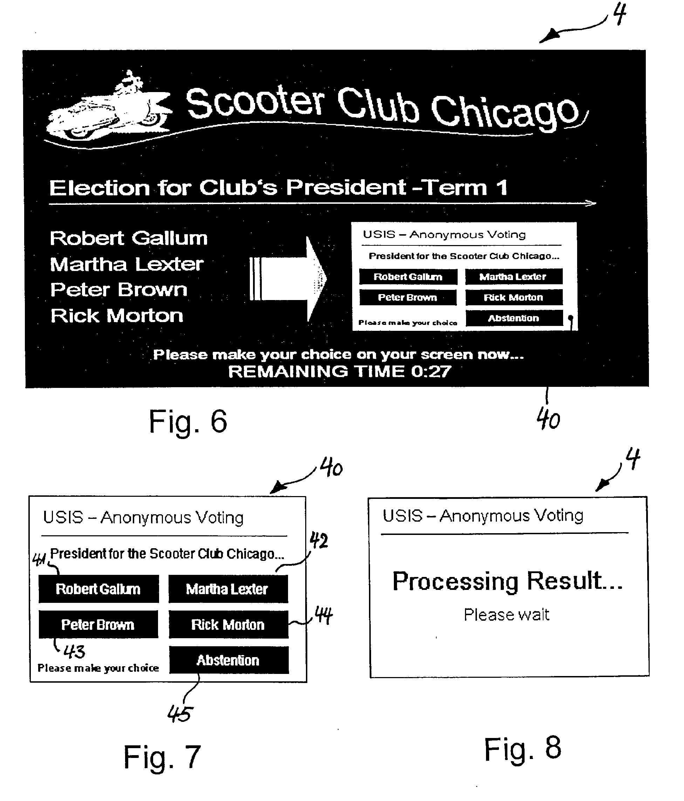

In **Fig. 6** ist ein weiteres Ausführungsbeispiel einer Anzeige 4 dargestellt. Man erkennt, dass hier das Abstimmungsmodul 12 (Fig. 1) aktiviert ist. Zu erkennen sind die Namen der Kandidaten für die hier beispielhaft gezeigte Wahl eines Clubpräsidenten sowie ein Fenster 40, welches ähnlich auch auf den Anzeigen der einzelnen Ein- und Ausgabeeinheiten erscheint (siehe unten). Ausserdem erscheint am unteren Rand der Anzeige 4 noch die Restzeit (hier: siebenundzwanzig Sekunden), innerhalb welcher eine Stimme noch gültig abgegeben werden kann. Dieses Bild kann beispielsweise auf eine Wand oder Leinwand im Konferenzsaal übertragen werden.

Das Fenster 40 aus Fig. 6 ist auf der Anzeige der einzelnen Ein- und Ausgabeeinheiten dargestellt, wie dies in **Fig. 7** zu erkennen ist. Das auf den Ein- und Ausgabeeinheiten dargestellte Fenster 40 enthält jedoch berührungsempfindliche Schaltflächen 41,42,43,44 für die in diesem Beispiel nominierten vier Kandidaten für das Präsidentenamt, sowie eine berührungsempfindliche Schaltfläche 45 für eine Enthaltung.

Sobald ein Teilnehmer die Stimme für einen der Kandidaten abgegeben hat oder eine Enthaltung gewählt hat, erscheint im Fenster 40 auf der Anzeige an den Ein- und Ausgabeeinheiten die Darstellung aus **Fig. 8**, aus der erkennbar ist, dass die abgegebene Stimme verarbeitet wird.

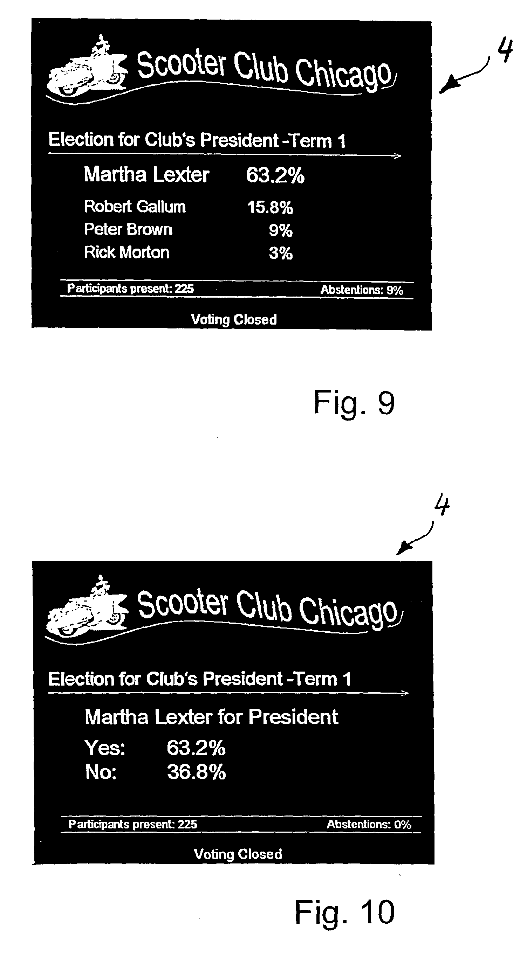

Haben alle wahlberechtigten Personen ihre Stimme abgegeben oder ist die Zeit abgelaufen, innerhalb welcher eine Stimme gültig abgegeben werden kann, so erfolgt die Auszählung der abgegebenen Stimmen und das Ergebnis wird beispielsweise in einer Art auf der Anzeige 4 angezeigt, wie dies in **Fig. 9** dargestellt ist. Dort erkennt man, wie viele Stimmen prozentual für welchen Kandidaten abgegeben wurden, wie viele Teilnehmer anwesend waren und wie viele Enthaltungen prozentual abgegeben wurden. Ferner erkennt man am unteren Rand der Anzeige 4, dass die Abstimmung beendet ist. Die Darstellung des Ergebnisses kann sowohl auf der Wand oder Leinwand als auch auf den Anzeigen der einzelnen Ein- und Ausgabeeinheiten erfolgen.

In einer anderen Darstellungsart **(Fig. 10)**, die beispielsweise dann von besonderem Interesse sein kann, wenn nur ein Kandidat vorhanden ist, erkennt man auf der jeweiligen Anzeige 4, wie viele Stimmen für den Kandidaten und wie viele Stimmen gegen einen Kandidaten abgegeben wurden, sowie den Anteil an Enthaltungen und die Gesamtzahl der Teilnehmer. Diese Darstellungsart ist besonders geeignet bei "Ja/Nein"-Abstimmungen. Auch hier erkennt man am unteren Rand der Anzeige, dass die Abstimmung beendet ist. Auch diese Darstellung des Ergebnisses kann sowohl auf der Wand oder Leinwand als auch auf den Anzeigen der einzelnen Ein- und Ausgabeeinheiten erfolgen.

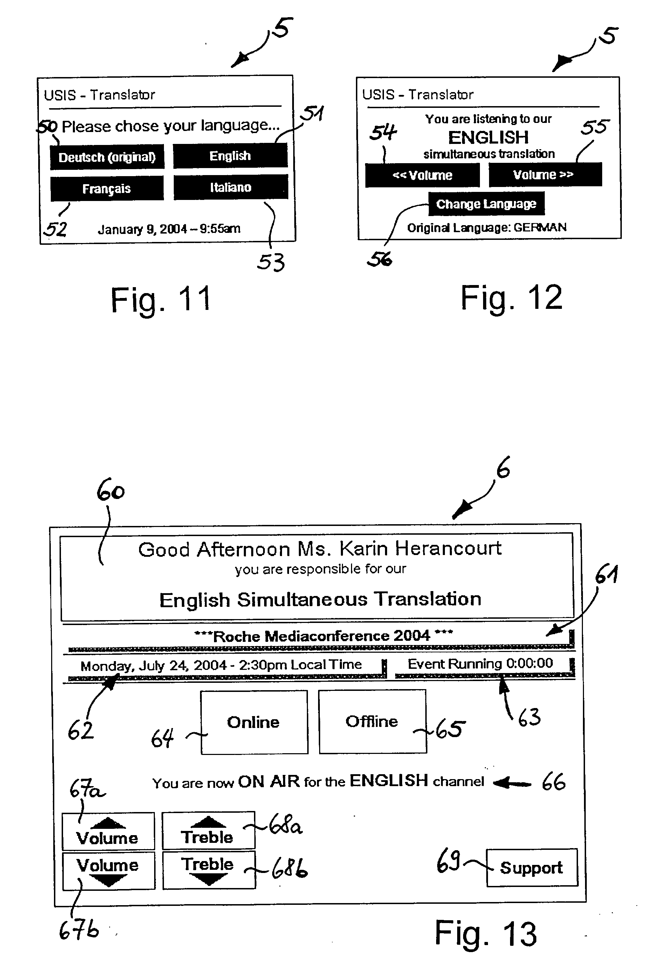

In **Fig. 11** erkennt man ein Ausführungsbeispiel der Anzeige 5 - einer berührungsempfindliche Anzeige - der Ein- und Ausgabeeinheit des erfindungsgemässen interaktiven Kommunikationssystems. Man erkennt aus Fig. 11, dass nun das Übersetzungsmodul aktiviert ist. Auf der Anzeige 5 sind vier berührungsempfindliche Schaltflächen 50,51,52,53 vorgesehen, die dem Teilnehmer erlauben, entweder die Beiträge in der Originalsprache (hier: deutsch) zu verfolgen, oder die Beiträge in einer der anderen Sprachen zu verfolgen, in welche die Beiträge durch Dolmetscher simultan übersetzt werden. Hierzu wird der Teilnehmer dann einen Kopfhörer verwenden.

Wählt der Teilnehmer durch Berührung der Schaltfläche 51 die englische Sprache aus, erscheint auf seiner Anzeige 5 beispielsweise die Darstellung aus **Fig. 12**. Erneut sind auf der Anzeige jetzt drei berührungsempfindliche Schaltflächen 54,55,56 vorgesehen, mit denen die Lautstärke geregelt werden kann oder zu einer anderen Sprache gewechselt werden kann.

In **Fig. 13** erkennt man ein Ausführungsbeispiel der Anzeige 6 einer Ein- und Ausgabeeinheit, wie sie sich für die Dolmetscherin darstellt, die zuständig ist für die Übersetzung der Beiträge aus der Originalsprache in eine der für die Teilnehmer bereit gestellten Sprachen. Bei dem hier dargestellten Ausführungsbeispiel ist die Dolmetscherin zuständig für die Übersetzung der Beiträge aus der Originalsprache (hier: deutsch) in die englische Sprache.

Bei dem hier gezeigten Ausführungsbeispiel des Anzeige 6 wird in einem Feld 60 die Dolmetscherin begrüsst und es wird ihr mitgeteilt, dass sie zuständig ist für die Simultanübersetzung in die englische Sprache. Ferner wird in einem Feld 61 die Veranstaltung angezeigt, sowie in einem Feld 62 das Datum und die Uhrzeit. In einem Feld 63 wird die Dauer der Veranstaltung angezeigt, die hier noch nicht begonnen hat. Ferner sind zwei Felder 64,65 vorgesehen, die der Dolmetscherin anzeigen sollen, ob sie bereits zugeschaltet ist oder nicht ("Online/Offline"). Dass sie zugeschaltet ist - wie hier gezeigt - wird der Dolmetscherin noch einmal ausdrücklich in einer Nachricht in einem Feld 66 mitgeteilt. Ferner sind noch vier berührungsempfindliche Schaltflächen 67a,67b,68a,68b vorgesehen, mit denen sich die Lautstärke und die Höhen regeln lassen. Schliesslich ist noch eine berührungsempfindliche Schaltfläche 69 vorgesehen, bei deren Berührung die Dolmetscherin einer Hilfsperson mitteilen kann, dass sie einen Wunsch oder ein Problem hat (z.B. ein technisches Problem oder ein Problem beim Handling).

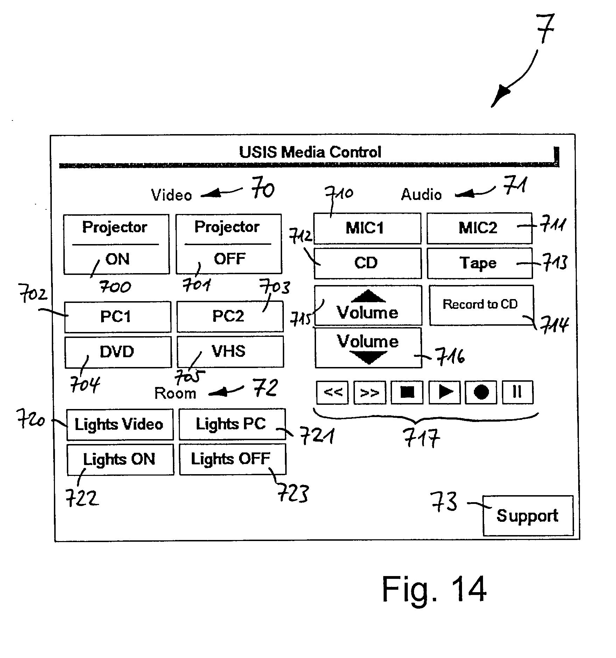

In **Fig. 14** erkennt man ein Ausführungsbeispiel der Anzeige 7 zur Steuerung verschiedener Medien (Endgeräte), die am Veranstaltungsort zur Verfügung stehen, wodurch quasi die gesamte "Infrastruktur" des Konferenzsaal gesteuert werden kann. Dazu zählen insbesondere (aber nicht abschliessend) audivo-visuelle Endgeräte, aber auch raumbezogene Elemente wie Vorhänge, Licht, Leinwände etc. Diese Steuerung kann - je nach Bedarf - von den einzelnen Plätzen und/oder von einem oder mehreren Kontrollpulten aus erfolgen.

Hierzu ist das Infrastruktur-Steuerungsmodul 14 (Fig. °1) aktiviert. Die beispielhaft dargestellte Anzeige 7 ist bei dem hier gezeigten Ausführungsbeispiel unterteilt in Video-Endgeräte und Audio-Endgeräte, wie aus den Feldern 70 und 71 erkennbar ist, sowie in raumbezogene Elemente 72.

In Bezug auf die Video-Endgeräte sind zwei berührungsempfindliche Schaltflächen 700 und 701 zum Ein- und Ausschalten eines Projektors zu erkennen, sowie zwei berührungsempfindlichen Schaltflächen 702 und 703 für die Aktivierung bzw. Deaktivierung von Personal Computern und deren Bildschirmen, eine berührungsempfindliche Schaltfläche 704 für die Aktivierung bzw. Deaktivierung eines DVD-Spielers sowie eine berührungsempfindliche Schaltfläche 705 für die Aktivierung bzw. Deaktivierung eines Videorecorders.

In Bezug auf die Audio-Endgeräte sind zwei berührungsempfindliche Schaltflächen 710 und 711 für die Aktivierung bzw. Deaktivierung von Mikrofonen vorgesehen, eine berührungsempfindliche Schaltfläche 712 für die Aktivierung bzw. Deaktivierung eines CD-Spielers, eine berührungsempfindliche Schaltfläche 713 zur Aktivierung bzw. Deaktivierung eines Bandgeräts, sowie eine berührungsempfindliche Schaltfläche 714 zur Aktivierung einer Aufzeichnung auf CD/DVD.

Zur Steuerung der Lautstärke erkennt man zwei berührungsempfindliche Schaltflächen 715,716 , und schliesslich zur Steuerung einzelner Geräte vorgesehene Schaltflächen 717 (Vor- und Zurückspulen, etc.).

In Bezug auf die raumbezogenen Elemente 72 sind hier beispielhaft dargestellt eine berührungsempfindliche Schaltfläche 720 zur Aktivierung bzw. Deaktivierung der Beleuchtung des Videorecorders, eine berührungsempfindliche Schaltfläche 721 zur Aktivierung bzw. Deaktivierung der Beleuchtung eines Personal Computers, sowie zwei Schaltflächen 722,723 zur Steuerung der Raumbeleuchtung. Schliesslich ist noch eine berührungsempfindliche Schaltfläche 73 vorgesehen, mit der eine Hilfsperson herbeigerufen werden kann.

Da jede Räumlichkeit anders gestaltet ist, versteht es sich, dass das vorstehend beschriebene Ausführungsbeispiel einer Anzeige 7 nur beispielhaften Charakter haben kann. Die Möglichkeiten variieren hier von sehr einfachen und schlichten Anzeigen (Steuerungsoberflächen) bis hin zu komplexen multimedialen Steuerungsoberflächen, mit denen sich beispielsweise ein globales Netzwerk von mehreren Konferenzräumen steuern lässt. Wie unmittelbar ersichtlich ist, ist das Kommunikationssystem höchst flexible und erlaubt eine einfache Erweiterung bzw. Anpassung an sich ändernde räumliche Ausstattungen bzw. Gegebenheiten und an sich ändernde Endgeräte- oder Hardware-Ausstattungen.

## Patentansprüche

1. Interaktives Kommunikationssystem für Veranstaltungen, mit einer Steuerungseinheit und mit mehreren Ein- und Ausgabeeinheiten, wobei die Steuerungseinheit eine Steuerungssoftware (1) mit mehreren Modulen umfasst, die individuell freischaltbar ausgebildet sind, und wobei die Module der Steuerungssoftware mindestens ein Steuermodul (10), ein Frage- und Antwortmodul (11), ein Abstimmungsmodul (12), ein Übersetzungsmodul (13) sowie ein Infrastruktur-Kontrollmodul (14) umfassen.

2. Kommunikationssystem nach Anspruch 1, bei welchem die Ein- und Ausgabeeinheiten eine berührungsempfindliche Anzeige umfassen.

3. Kommunikationssystem nach einem der Ansprüche 1 oder 2, welches ein oder mehrere Endgeräte wie z.B. Kameras, Mikrofone, Kopfhörer, Projektoren, etc. umfasst, welche durch das Infrastruktur-Kontrollmodul (14) der in der Steuerungseinheit vorgesehenen Steuerungssoftware (1) individuell, gruppenweise oder global angesteuert werden können.

4. Kommunikationssystem nach einem der Ansprüche 2 oder 3, mit mehreren Verteilereinheiten, welche jeweils mit Gruppen von berührungsempfindlichen Anzeigen verbunden sind, wobei die Verteilereinheiten jeweils mehrere serielle Schnittstellen aufweisen, an welche die einzelnen Anzeigen angeschlossen sind, ferner einen Konverter zum Umsetzen von seriellen Signalen in ETHERNET-Signale und umgekehrt, sowie einen ETHERNET-Anschluss, welcher mit der Steuerungseinheit verbunden ist.
